# FASCICULE DE BREVET EUROPEEN

(11) **EP 4 103 820 B1**
(45) Date de publication et mention de la délivrance du brevet: **29.01.2025**
(21) Numéro de dépôt: 21709078.6
(22) Date de dépôt: 11.02.2021
(51) Int. Cl.: F16D 3/72, F01D 5/02, F01D 5/10, F01D 21/08, F02C 7/36

(54) **ARBRE D'ENTRÉE FLEXIBLE TRONCONIQUE**
BIEGSAME KEGELSTUMPFFÖRMIGE EINGANGSWELLE
FLEXIBLE FRUSTOCONICAL INPUT SHAFT

(30) Priorité: 14.02.2020 FR 2001500
(43) Date de publication de la demande: 21.12.2022
(73) Titulaire: SAFRAN AIRCRAFT ENGINES, 75015 Paris (FR)
(72) Inventeur: DESOMBRE, Didier Gabriel Bertrand, 77550 MOISSY-CRAMAYEL (FR); FELIOT, Paul, 77550 MOISSY-CRAMAYEL (FR)
(74) Mandataire: Regimbeau
(86) Numéro de dépôt international: PCT/FR2021/050245
(87) Numéro de publication internationale: WO 2021/160969

(56) Documents cités:
- EP-A1- 3 153 680
- WO-A1-2019/122740
- US-A- 5 433 674
- US-A1- 2010 150 702
- US-A1- 2014 248 129

## Description

### DOMAINE DE L'INVENTION

La présente invention concerne le domaine des systèmes propulsifs aéronautiques, et plus précisément des systèmes propulsifs à double flux présentant un mécanisme de réduction pour entrainer la soufflante.

### ETAT DE LA TECHNIQUE

Un système propulsif à double flux comprend généralement, d'amont en aval dans le sens de l'écoulement des gaz, une soufflante, un espace annulaire d'écoulement primaire et un espace annulaire d'écoulement secondaire qui est extérieurement par rapport à l'écoulement primaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire. La soufflante (ou hélice) peut être carénée et logée dans un carter de soufflante ou en variante non carénée du type USF (acronyme anglais de Unducted Single Fan, pour soufflante unique non carénée). Les aubes de soufflante peuvent être fixes ou présenter un calage variable, le calage étant ajusté en fonction des phases de vol par un mécanisme de changement de pas.

L'espace d'écoulement primaire traverse un corps primaire comprenant un ou plusieurs étages de compresseurs, par exemple un compresseur basse pression (ou booster) et un compresseur haute pression, une chambre de combustion, un ou plusieurs étages de turbines, par exemple une turbine haute pression et une turbine basse pression, et une tuyère d'échappement des gaz. Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé sur un certain tronçon dans l'arbre haute pression.

Afin d'améliorer le rendement propulsif du système propulsif et de réduire sa consommation spécifique ainsi que le bruit émis par la soufflante, il a été proposé des systèmes propulsifs présentant un taux de dilution (bypass ratio en anglais), c'est-à-dire le rapport entre le débit du flux secondaire et le débit du flux primaire, élevé. Par taux de dilution élevé, on comprendra ici un taux de dilution supérieur à 10, par exemple de l'ordre de 15 ou 20 ou encore largement supérieur, par exemple de l'ordre de 40 ou 80 dans le cas de turbomachine dont la soufflante est non carénée.

Pour atteindre de tels taux de dilution, la soufflante est découplée de la turbine basse pression, permettant ainsi d'optimiser indépendamment leur vitesse de rotation respective. Généralement, le découplage est réalisé à l'aide d'un mécanisme de réduction tel qu'un mécanisme de réduction épicycloïdal ou planétaire, placé entre l'extrémité amont de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante et d'augmenter la puissance extraite par la turbine basse pression.

Un tel mécanisme de réduction comprend généralement, de manière connue en soi :
- un pignon central, dit pignon solaire, auquel peut être connecté un arbre d'entrainement du système propulsif, typiquement l'arbre basse pression
- une couronne, coaxiale avec le pignon solaire et
- des satellites montés sur un porte-satellites, chaque satellite étant engrené d'une part avec le pignon solaire et d'autre part avec la couronne.

L'arbre de sortie (généralement, l'arbre de soufflante) peut notamment être entrainé en rotation par l'un parmi la couronne ou le porte-satellites, l'autre étant fixe par rapport au carter du mécanisme de réduction.

Toutefois, un système propulsif comprenant un mécanisme de réduction est susceptible de rencontrer un certain nombre de difficultés à concilier aux interfaces :
- Les niveaux de raideur/souplesse adéquats permettant de limiter les surcharges à l'intérieur des pièces du mécanisme de réduction, surcharges générées en partie par les désalignements externes (problématique de gestion des désalignements), notamment entre l'arbre d'entrainement et le pignon solaire.
- La bonne tenue mécanique des pièces du mécanisme de réduction vis-à-vis des sollicitations spécifiques liées aux désalignements, notamment sur les pièces rotoriques (sollicitation de type flexion rotative combinée avec de la torsion liée au passage du couple).
- Le comportement mécanique des liaisons (telles que les cannelures des arbres ou les dents du pignon solaire, des satellites et de la couronne) et leur contribution à la reprise des désalignements.
- L'optimisation de l'encombrement axial du mécanisme de réduction (impact sur la longueur moteur).
- Les jeux fonctionnels entre les différentes pièces du mécanisme de réduction.
- Les conditions de montage et de modularité optimales.
- La capacité à réaliser la fabrication des pièces de souplesse, compte-tenu de leur forme généralement complexe.

Afin de compenser les désalignements éventuels entre l'arbre d'entrainement et le mécanisme de réduction, il a été proposé de rapporter, entre l'arbre d'entrainement et le pignon d'entrée, un arbre dit flexible configuré pour répondre à une spécification de souplesse cohérente avec les surcharges du mécanisme de réduction et la situation de la dynamique d'ensemble moteur. L'arbre comprend à cet effet deux soufflets droits séparés par un fût tubulaire, le fût tubulaire et les soufflets étant monolithiques, c'est-à-dire fixés solidairement ensemble. Les soufflets jouent le rôle de ressort et présentent chacun une souplesse en rotation de type flexion de l'arbre par rapport à son axe théorique de rotation, tandis que le fût est rigide (non déformable en rotation ni en flexion en conditions d'utilisation). L'arbre comprend en outre une extrémité amont portant une cannelure et configurée pour venir en prise avec des dents associées du pignon solaire et une extrémité aval configurée pour être fixée sur l'arbre d'entrainement par exemple au voisinage d'un palier du système de propulsion. Le fût étant rigide, l'arbre est capable de transmettre le couple appliqué par l'arbre d'entrainement du système propulsif (généralement l'arbre basse pression, qui est entrainé par la turbine basse pression). Cette transmission de couple génère cependant des contraintes mécaniques dans l'arbre dites « statiques » ou « moyennes ». Par ailleurs, les soufflets sont configurés pour compenser les désalignements entre l'arbre d'entrainement (au niveau de l'extrémité aval de l'arbre) et le pignon solaire du mécanisme de réduction (au niveau de son extrémité amont). Cependant, ces désalignements génèrent sur l'arbre un comportement de flexion rotative à grand nombre de cycles et des contraintes alternées, dites contraintes « dynamiques » (car elles varient sur un tour de l'arbre).

Le dimensionnement de l'arbre doit donc tenir compte de ces contraintes dynamiques et statiques en trouvant le meilleur compromis du point de vue de la géométrie de l'arbre et de la répartition des inerties entre le fût et les soufflets pour optimiser la tenue mécanique et la marge en durée de vie de l'arbre. Plus précisément, le fût doit être suffisamment raide pour limiter les contraintes statiques tandis que les soufflets doivent être suffisamment souples pour limiter les contraintes dynamiques.

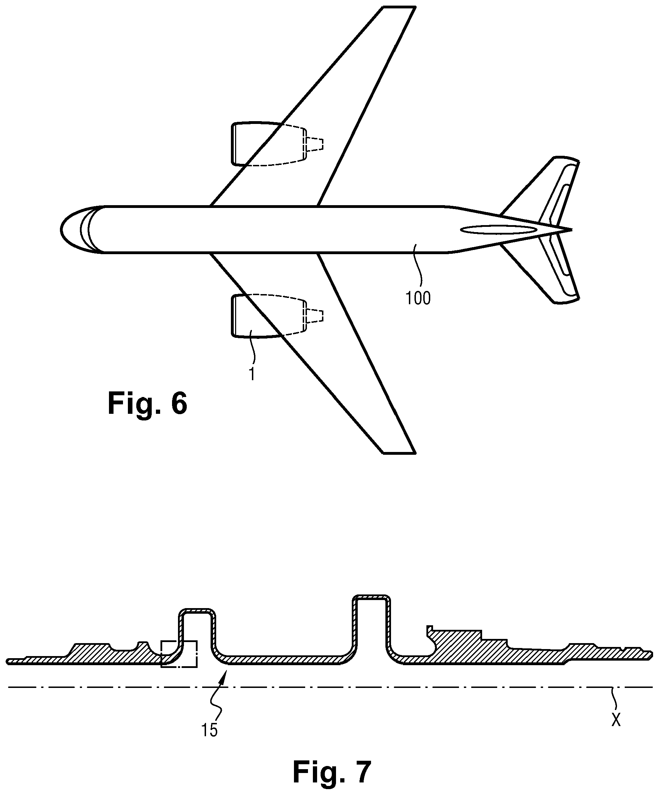

Cependant, il apparaît que les contraintes statiques maximales sont concentrées dans la même zone de l'arbre que les contraintes dynamiques maximales, à savoir au niveau de la jonction entre l'extrémité amont de l'arbre et le soufflet adjacent (voir la zone entourée sur la figure 7 annexée). Or, la concentration des contraintes statiques et dynamiques au même endroit de l'arbre réduit sensiblement les marges en durée de vie de l'arbre.

Le document WO 2019/122740 décrit une turbomachine comprenant un premier arbre étant entraîné en rotation via un réducteur par un second arbre comportant des moyens élastiquement déformables à soufflet(s). Le document EP 3153680 A1 décrit une turbine à gaz comprenant un réducteur entraîné par un arbre comportant deux soufflets bridés.

### EXPOSE DE L'INVENTION

Un but de l'invention est de proposer une solution aux inconvénients décrits ci-dessus, et notamment d'apporter de la robustesse sur la tenue mécanique de l'arbre tout en restant conforme aux spécifications de souplesse.

Il est à cet effet proposé, selon un premier aspect de l'invention un arbre pour un système propulsif selon la revendication 1 et selon un second aspect de l'invention un arbre pour un système propulsif selon la revendication 3.

Le fût de l'arbre est en particulier tronconique lorsqu'il est au repos, c'est-à-dire en dehors de toute sollicitation externe.

Certaines caractéristiques préférées mais non limitatives de l'arbre selon le premier aspect sont les suivantes, prises individuellement ou en combinaison :
- un demi-angle au sommet du cône tronqué défini par le fût tronconique est supérieur ou égal à 5° et inférieur ou égal à 25°.
- un diamètre maximal du premier soufflet est compris entre 80 % et 120 % d'un diamètre maximal du deuxième soufflet.
- le premier soufflet est raccordé à la première extrémité par un premier congé, un rayon de courbure du premier congé étant supérieur ou égal à 10 mm et inférieur ou égal à 20 mm.
- une portion de la première extrémité est tronconique.
- le deuxième soufflet est raccordé au fût au niveau d'un deuxième congé, un rayon de courbure du deuxième congé étant supérieur ou égal à 10 mm et inférieur ou égal à 15 mm.
- la première extrémité comprend des cannelures configurées pour venir en prise avec des dents du pignon d'entrée.

Selon un troisième aspect, l'invention propose un ensemble d'entrainement pour un système propulsif, ledit ensemble comprenant un arbre selon le premier aspect et un mécanisme de réduction comprenant un pignon d'entrée, la première extrémité de l'arbre venant en prise avec le pignon d'entrée du mécanisme de réduction afin de l'entrainer en rotation autour de l'axe de rotation.

Selon un quatrième aspect, l'invention propose un système propulsif comprenant un ensemble d'entrainement selon le deuxième aspect et une section de turbine, ladite section de turbine étant raccordée à l'arbre de sorte à l'entrainer en rotation autour de l'axe de rotation.

Selon un cinquième aspect, l'invention propose un aéronef comprenant un système propulsif selon le troisième aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de système propulsif aéronautique comprenant une soufflante carénée conforme à un mode de réalisation de l'invention.
La figure 2 est une vue en coupe partielle d'un exemple de réalisation d'un arbre pour un système propulsif conforme à un premier mode de réalisation, sur lequel les lieux de concentration des contraintes statiques et dynamiques ont été encadrés.
La figure 3 est une vue en coupe partielle d'un exemple de réalisation d'un arbre pour un système propulsif conforme à un deuxième mode de réalisation, sur lequel les lieux de concentration des contraintes statiques et dynamiques ont été encadrés.
La figure 4 est une vue en perspective de l'arbre de la figure 2, sur laquelle ont été représentés les champs de contrainte dynamiques lorsque l'arbre est dans un système propulsif en fonctionnement.
La figure 5 est une vue en perspective de l'arbre de la figure 2, sur laquelle ont été représentés les champs de contrainte statiques lorsque l'arbre est dans un système propulsif en fonctionnement.
La figure 6 est une vue du dessus d'un exemple d'aéronef pouvant comprendre un système propulsif conforme à l'invention.
La figure 7 est une vue en coupe partielle d'un arbre conventionnel, sur lequel le lieu de concentration des contraintes statiques et dynamiques a été entouré.
La figure 8 est une vue en coupe partielle d'un exemple de réalisation d'un arbre pour un système propulsif conforme à un troisième mode de réalisation, en exemple de variante de réalisation du mode de réalisation illustré sur la figure 7.
La figure 9 est un exemple de variante de réalisation du premier mode de réalisation illustré sur la figure 2.
La figure 10 est un exemple de variante de réalisation du deuxième mode de réalisation illustré sur la figure 3.

Sur l'ensemble des figures, les éléments similaires portent des références identiques.

### DESCRIPTION DETAILLEE DE L'INVENTION

Dans la présente demande, l'amont et l'aval sont définis par rapport au sens d'écoulement normal du gaz dans la soufflante et à travers le système propulsif.

Le système propulsif 1 pour aéronef 100 comprend, de manière conventionnelle, une soufflante 2 et un corps primaire. Le corps primaire comprend, dans le sens d'écoulement des gaz dans le système propulsif 1, un canal d'entrée s'étendant immédiatement en aval de la soufflante 2, un compresseur basse pression 4 (ou booster), un compresseur haute pression 5, une chambre de combustion, une turbine haute pression 7, une turbine basse pression 9 et une tuyère d'échappement des gaz. La turbine haute pression 7 entraine en rotation le compresseur haute pression 5 par l'intermédiaire d'un arbre haute pression 8 tandis que la turbine basse pression 9 entraine en rotation le compresseur basse pression 4 et la soufflante 2 par l'intermédiaire d'un arbre basse pression 10.

La soufflante 2 comprend un disque de soufflante 43 pourvu d'aubes de soufflante 11 à sa périphérie qui, lorsqu'elles sont mises en rotation, entraînent le flux d'air dans les espaces d'écoulement primaire et secondaire du système propulsif 1.

L'invention s'applique à tout type de système propulsif 1 aéronautique à double flux, que la soufflante 2 soit carénée ou non carénée, à aubes fixes ou à calage variable.

Le système propulsif 1 présente un taux de dilution élevé. Par taux de dilution élevé, on comprendra ici un taux de dilution supérieur ou égal à 10, par exemple compris entre 10 et 80 (en incluant un ordre de grandeur pour le cas d'un moteur dont la soufflante est non carénée). Pour cela, la soufflante 2 est découplée de la turbine basse pression 9 pour optimiser indépendamment leur vitesse de rotation respective à l'aide d'un mécanisme de réduction 12 placé entre l'extrémité amont (par rapport au sens d'écoulement des gaz dans le système propulsif 1) de l'arbre basse pression 10 et la soufflante 2. La soufflante 2 est alors entrainée par l'arbre basse pression 10 par l'intermédiaire du mécanisme de réduction 12 et d'un arbre de soufflante 13, qui est fixé entre le mécanisme de réduction 12 et le disque de la soufflante 2. L'arbre de soufflante 13 est mobile en rotation autour d'un axe de rotation X coaxial à l'axe de rotation X de l'arbre basse pression 10.

Pour calculer le taux de dilution, le débit du flux secondaire et le débit du flux primaire sont mesurés lorsque le système propulsif 1 est stationnaire en régime de décollage dans une atmosphère standard (telle que définie par le manuel de l'Organisation de l'aviation civile internationale (OACl), Doc 7488/3, 3e édition) et au niveau de la mer.

De manière connue en soi, le mécanisme de réduction 12 comprend, comme cela a été décrit plus haut :
- un pignon solaire 14, monté mobile en rotation autour d'un axe de rotation X, au centre du réducteur,
- une couronne, coaxiale avec le pignon solaire 14 et
- des satellites, montés sur un porte-satellites, chaque satellite étant engrenés d'une part avec le pignon central et d'autre part avec la couronne.

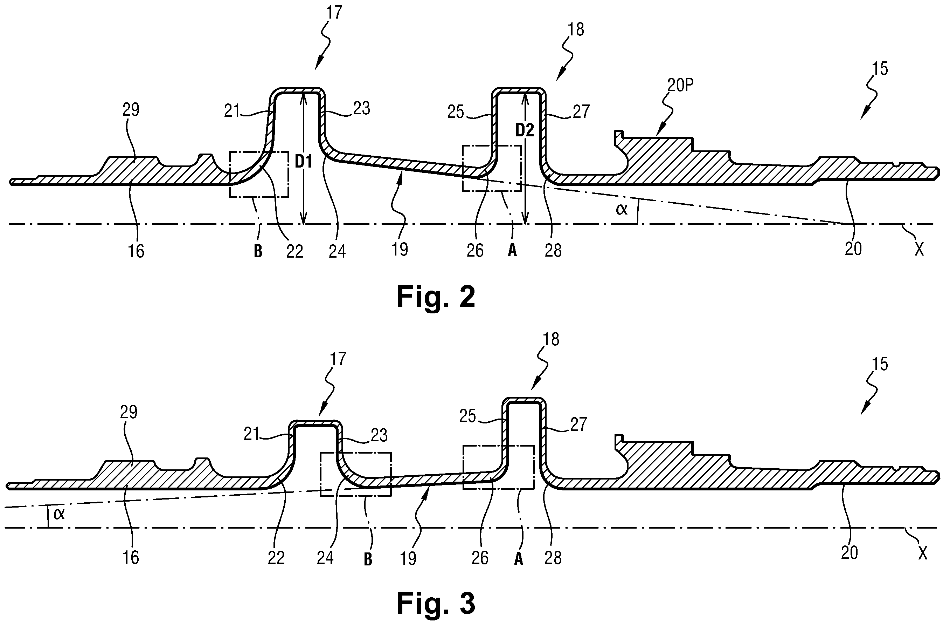

Afin d'apporter de la robustesse sur la tenue mécanique de l'arbre basse pression pour son raccordement avec le mécanisme de réduction 12 tout en restant conforme aux spécifications de souplesse, le système propulsif 1 comprend un arbre 15, dit flexible, configuré pour entrainer le mécanisme de réduction 12 en rotation autour de l'axe de rotation X, et comprenant :
- une première extrémité 16, ou extrémité amont 16, configurée pour venir en prise avec le pignon solaire 14 du mécanisme de réduction 12,
- un premier soufflet 17 et un deuxième soufflet 18, le premier soufflet 17 et le deuxième soufflet 18 étant symétriques de révolution autour de l'axe de rotation X, le premier soufflet 17 s'étendant entre la première extrémité 16 et le deuxième soufflet 18,
- un fût 19 raccordant mécaniquement le premier soufflet 17 et le deuxième soufflet 18 et
- une deuxième extrémité 20, ou extrémité aval 20, s'étendant en aval du deuxième soufflet 18 à l'opposé de l'extrémité amont 16 et configurée pour être fixée sur un palier du système propulsif 1, typiquement un palier avant de l'arbre basse pression 10. Une portée avec un tel roulement est référencée 20P à la figure 2, un tel palier portant de manière classique l'extrémité aval de l'arbre 15 et l'amont de l'arbre basse pression.

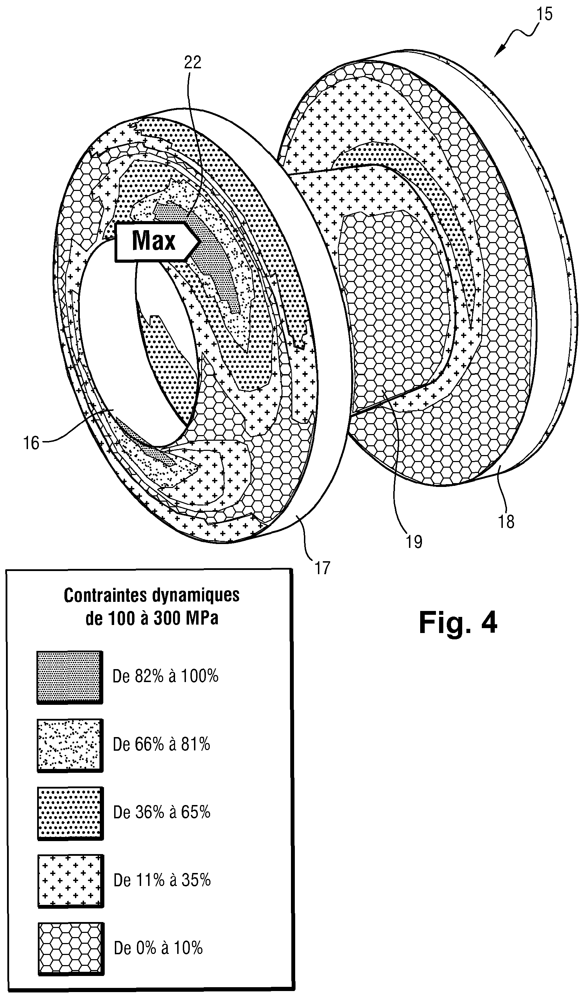

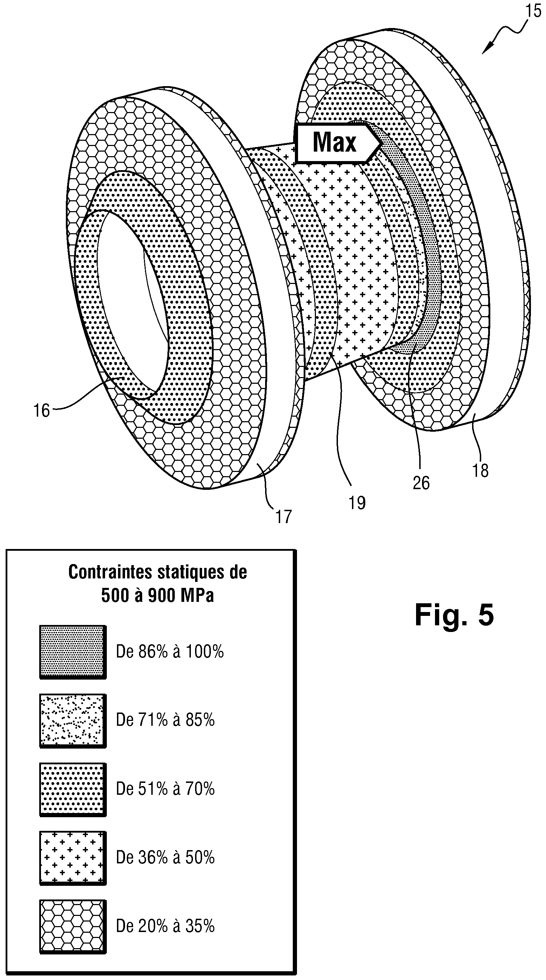

Le fût 19 de l'arbre 15 est tronconique, de sorte que le lieu de contrainte maximale statique (encadré A) est décorrélé du lieu de contrainte dynamique maximale (encadré B), comme cela ressort des figures 4 et 5. Le fût 19 de l'arbre 15 est donc tronconique lorsqu'il est au repos, c'est-à-dire en dehors de toute sollicitation externe. Ainsi, les contraintes statiques maximales sont localisées à l'interface entre le deuxième soufflet 18 et le fût 19, tandis que les contraintes dynamiques maximales sont localisées à l'interface entre le premier soufflet 17 et l'extrémité amont 16 de l'arbre 15. La marge en durée de vie de l'arbre 15 est donc sensiblement améliorée en comparaison avec les arbres à fût 19 tubulaires conventionnels.

L'angle d'inclinaison et l'orientation du tronc de cône formant le fût 19 sont dimensionnés en fonction du désalignement absolu pouvant exister en amont et en aval de l'arbre 15. Par désalignement absolu, on comprendra ici le désalignement résultant uniquement du mouvement en amont (respectivement en aval) de l'arbre 15, par opposition au désalignement relatif de l'arbre 15, qui correspond à la somme des désalignements absolus vus par l'arbre 15.

En particulier, lorsque, dans un système propulsif 1 donné, les désalignements absolus sont plus importants à l'amont de l'arbre 15 (c'est-à-dire au niveau du mécanisme de réduction 12) qu'à l'aval (c'est-à-dire au niveau du palier côté amont de l'arbre basse pression), le fût 19 tronconique converge de l'amont vers l'aval. En d'autres termes, le diamètre du fût 19 tronconique est plus grand au niveau du premier soufflet 17 qu'au niveau du deuxième soufflet 18 (figure 2).

En revanche, lorsque, dans un système propulsif 1 donné, les désalignements absolus sont plus importants à l'aval de l'arbre 15 qu'à l'amont, le fût 19 tronconique diverge de l'amont vers l'aval. En d'autres termes, le diamètre du fût 19 tronconique est plus petit au niveau du premier soufflet 17 qu'au niveau du deuxième soufflet 18 (figure 3).

Par diamètre, on comprendra ici le diamètre mesuré dans un plan normal à l'axe de rotation X.

Dans ce qui suit, l'invention sera plus particulièrement décrite dans le cas d'un arbre 15 tronconique convergeant, c'est-à-dire dont le diamètre le plus grand est positionné à proximité du flanc aval du premier soufflet 17. Comme cela vient d'être précisé, ceci n'est cependant pas limitatif, l'arbre 15 tronconique pouvant être divergeant, comme cela est illustré sur la figure 3. La description s'applique donc mutatis mutandis à un tel arbre 15 divergent en inversant simplement la configuration décrite, sauf indication explicite dans la suite de la présente description.

Dans une forme de réalisation, la pente du cône tronqué formant le fût 19 présente un demi-angle α au sommet compris entre 5° et 25°. Par demi-angle α au sommet, on comprendra ici l'angle α formé entre l'axe de rotation X et la surface externe du fût 19.

Chaque soufflet 17, 18 présente un flanc amont et un flanc aval. Le flanc amont 21 du premier soufflet 17 est raccordé à l'extrémité amont 16 de l'arbre 15 par l'intermédiaire d'un premier congé amont 22 et son flanc aval 23 est raccordé au fût 19 par l'intermédiaire d'un premier congé aval 24. De même, le flanc amont 25 du deuxième soufflet 18 est raccordé au fût 19 par l'intermédiaire d'un deuxième congé amont 26 et son flanc aval 27 est raccordé à l'extrémité aval 20 de l'arbre 15 par l'intermédiaire d'un deuxième congé aval 28.

Dans une forme de réalisation, le fût 19 présentant un diamètre plus grand au niveau du flanc aval 23 du premier soufflet 17, le diamètre maximal D1 du premier soufflet 17 peut être augmenté en comparaison avec les arbres conventionnels afin que le premier soufflet 17 reste suffisamment souple. En effet, la souplesse d'un soufflet dépend au premier ordre de son étendue radiale maximale (c'est-à-dire sa hauteur en considérant le diamètre au sommet du soufflet à comparer au diamètre de l'arbre du côté radialement interne du flanc aval 21 dudit premier soufflet 17). Il en découle que le rayon de courbure des premiers congés amont 22 et aval 24 peuvent également être augmentés, ce qui réduit les contraintes statiques dans ces premiers congés 22, 24.

Typiquement, le diamètre maximal D1 du premier soufflet 17 est compris entre 80% et 120% du diamètre maximal D2 du deuxième soufflet 18, par exemple entre 90% et 100%.

Par ailleurs, le rayon de courbure du premier congé amont 22 peut être supérieur ou égal à 10 mm et inférieur ou égal à 20 mm. Le rayon de courbure du premier congé aval 24 peut être supérieur ou égal à 5 mm et inférieur ou égal à 15 mm.

On notera en particulier que plus le demi-angle α du cône tronqué formant le fût 19 est élevé, plus le diamètre maximal D1 du premier soufflet 17 est élevé (pour rester à iso-souplesse et respecter le compromis entre la tenue mécanique de l'arbre 15 et les spécifications de souplesse par rapport au système de propulsion, sans modifier la longueur de l'arbre 15) et plus les rayons de courbure des premiers congés amont 22 et aval 24 peuvent être grands.

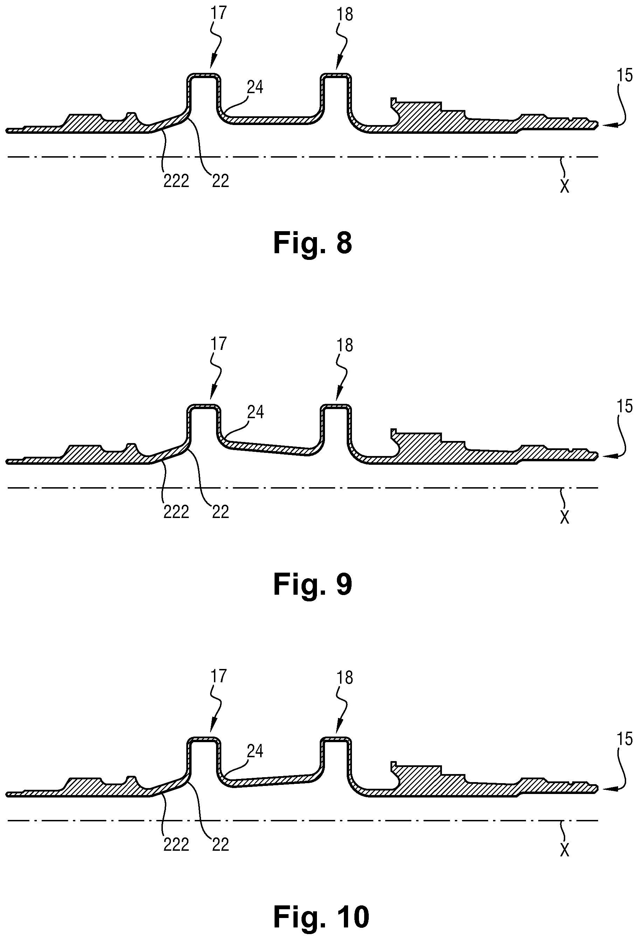

Optionnellement, afin de réduire encore les contraintes statiques au niveau du premier congé amont, l'extrémité amont 16 peut comprendre une portion tronconique 222 (voir notamment figures 8 à 10 annexées). De préférence, l'extrémité amont 16 portant les cannelures 29 configurées pour mettre en prise l'arbre 15 avec le pignon solaire 14 du mécanisme de réduction 12, la portion tronconique 222 s'étend entre le premier congé amont 22 et les cannelures 29 (la portion comprenant les cannelures 29 restant globalement tubulaire). Le rayon de courbure du premier congé amont 22 peut alors être encore davantage augmenté en comparaison avec les arbres conventionnels.

Au niveau du deuxième soufflet 18, en se référant à la figure 2, la forme tronconique de l'arbre 15 a pour conséquence de réduire l'étendue angulaire du rayon de courbure du deuxième congé amont 26 ce qui augmente les contraintes statiques dans cette zone. En effet, cette partie du fût 19 présente un diamètre plus faible. Toutefois, la Demanderesse s'est aperçue du fait que, ce deuxième congé amont 26 ne concentrant plus que les contraintes maximales statiques (les contraintes dynamiques étant faibles), son dimensionnement était plus souple. L'augmentation des contraintes statiques au niveau du deuxième congé amont 26 n'impacte donc pas l'augmentation de la marge en durée de vie résultant de la forme tronconique du fût 19.

Un arbre 15 présentant un fût 19 tronconique s'évasant d'aval vers l'amont, comme représenté à la figure 2, permet ainsi d'obtenir des contraintes statiques importantes mais des contraintes dynamiques faibles au niveau du deuxième soufflet 18 (encadré A), du côté du deuxième congé amont 26, ainsi que des contraintes statiques faibles et des contraintes dynamiques moyennes au niveau du premier soufflet 17 (encadré B), du côté du premier congé amont 22, ce qui permet d'augmenter significativement la marge en durée de vie.

Dans une forme de réalisation, l'arbre 15 est réalisé dans de l'acier, par exemple de l'acier inoxydable, ou un superalliage à base de nickel et comprenant du chrome, du fer, du niobium et du molybdène, par exemple à environ 19 ou 20 pourcents de Nickel et aussi 19 ou 20 pourcents de chrome et également 19 ou 20 pourcents de fer et par exemple aussi quelques pourcents de niobium et de molybdène. Dans le cas d'un arbre 15 réalisé en dans un tel alliage avec les proportions ci-après NiCr19Fe19Nb5Mo3, l'épaisseur du fût 19 peut par exemple être comprise entre 4.0 mm et 8.0 mm et l'épaisseur des soufflets être de l'ordre de 2,5 et 5.0 mm, à 10 % près. Le diamètre maximal D1 du premier soufflet 17 peut être supérieur à 170 mm, par exemple inférieur à 250 mm, en restant par exemple supérieur au diamètre maximal D2 du deuxième soufflet 18. Le diamètre maximal D2 du deuxième soufflet 18 peut être supérieur ou égal à 150 mm et par exemple inférieur à 240 mm, en restant par exemple inférieur au diamètre maximal D1 du premier soufflet. Le rayon de courbure du deuxième congé amont 26 peut être compris entre 5 mm et 10 mm. Le rayon de courbure du deuxième congé aval 28 peut être également compris entre 5 mm et 10 mm. De manière générale, le soufflet qui est adjacent au fût à son extrémité présentant son diamètre le plus grand peut présenter un diamètre externe maximal plus important que soufflet qui est adjacent au fût à son extrémité présentant son diamètre le plus petit.

On notera de plus que la forme tronconique de l'arbre 15 permet de faciliter ses conditions de fabrication. En effet, les soufflets 17, 18 sont généralement réalisés par enlèvement de matière par un outil depuis l'intérieur du fût 19, ce qui constitue une opération délicate. La forme tronconique du fût 19 permet ainsi de faciliter l'accès à la zone interne de l'arbre 15 et de dégager de l'espace pour les outils d'usinage.

En variante de réalisation, tel que représenté à la figure 3, un arbre 15 présentant un fût 19 tronconique évasé de l'amont vers l'aval permet d'obtenir des contraintes statiques importantes mais des contraintes dynamiques faibles au niveau du deuxième soufflet 18 (encadré A), du côté du deuxième congé amont 26, ainsi que des contraintes statiques faibles et des contraintes dynamiques moyennes au niveau du premier soufflet 17 (encadré B), du côté du premier congé aval 24, ce qui permet d'augmenter significativement la marge en durée de vie.

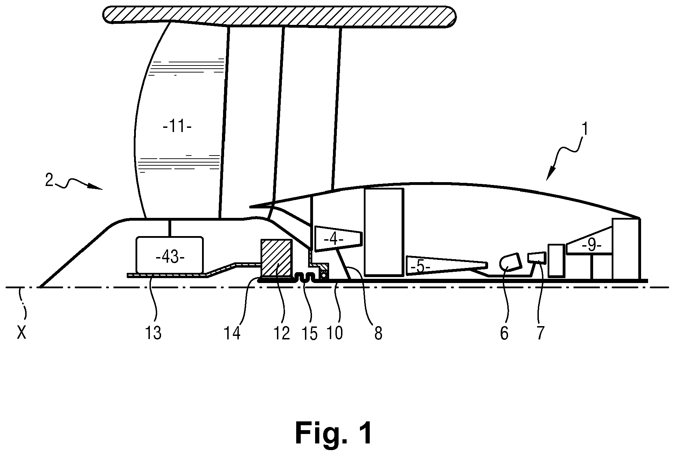

L'invention a été illustrée en relation avec un moteur à double flux caréné (cf. figure 1) mais elle est aussi applicable à des arbres correspondants dans le cadre d'un moteur de type à flux secondaire ouvert tel qu'un USF (acronyme anglais d'Unducted Singe Fan) dont le module comprenant l'aubage rotorique de soufflante son aubage aval de redresseur ne sont pas carénés.

## Revendications

1. Arbre (15) pour un système propulsif (1) configuré pour entrainer en rotation autour d'un axe de rotation (X) un mécanisme de réduction (12), ledit arbre (15) comprenant :
une première extrémité (16), configurée pour venir en prise avec un pignon d'entrée (14) du mécanisme de réduction (12),
un premier soufflet (17) et un deuxième soufflet (18), le premier soufflet (17) et le deuxième soufflet (18) étant symétriques de révolution autour de l'axe de rotation (X), le premier soufflet (17) s'étend entre la première extrémité (16) et le deuxième soufflet (18), et
un fût (19) raccordant mécaniquement le premier soufflet (17) et le deuxième soufflet (18), le fût (19) présentant un premier diamètre à proximité du premier soufflet (17) et un deuxième diamètre à proximité du deuxième soufflet (18),
l'arbre (15) étant **caractérisé en ce que** le fût (19) est tronconique et **en ce que** le deuxième diamètre est strictement inférieur au premier diamètre.

2. Arbre (15) selon la revendication 1, dans lequel un diamètre maximal (D1) du premier soufflet (17) est compris entre 80 % et 120 % d'un diamètre maximal (D2) du deuxième soufflet (18).

3. Arbre (15) pour un système propulsif (1) configuré pour entrainer en rotation autour d'un axe de rotation (X) un mécanisme de réduction (12), ledit arbre (15) comprenant :
une première extrémité (16), configurée pour venir en prise avec un pignon d'entrée (14) du mécanisme de réduction (12),
un premier soufflet (17) et un deuxième soufflet (18), le premier soufflet (17) et le deuxième soufflet (18) étant symétriques de révolution autour de l'axe de rotation (X), le premier soufflet (17) s'étend entre la première extrémité (16) et le deuxième soufflet (18), et
un fût (19) raccordant mécaniquement le premier soufflet (17) et le deuxième soufflet (18), le fût (19) présentant un premier diamètre à proximité du premier soufflet (17) et un deuxième diamètre à proximité du deuxième soufflet (18),
l'arbre (15) étant **caractérisé en ce que** le fût (19) est tronconique et **en ce que** le deuxième diamètre étant strictement supérieur au premier diamètre.

4. Arbre (15) selon la revendication 3, dans lequel un diamètre maximal du deuxième soufflet (17) est compris entre 80 % et 120 % d'un diamètre maximal du premier soufflet (18).

5. Arbre (15) selon l'une des revendications 1 à 4, dans lequel un demi-angle (α) au sommet du cône tronqué défini par le fût (19) tronconique est supérieur ou égal à 5° et inférieur ou égal à 25°.

6. Arbre (15) selon l'une des revendications 1 à 5, dans lequel le premier soufflet (17) est raccordé à la première extrémité (16) par un premier congé (22), un rayon de courbure du premier congé (22) étant supérieur ou égal à 10 mm et inférieur ou égal à 20 mm.

7. Arbre (15) selon l'une des revendications 1 à 6, dans lequel une portion de la première extrémité (16) est tronconique.

8. Arbre (15) selon l'une des revendications 1 à 7, dans lequel le deuxième soufflet (18) est raccordé au fût (19) au niveau d'un deuxième congé (26), un rayon de courbure du deuxième congé (26) étant supérieur ou égal à 10 mm et inférieur ou égal à 15 mm.

9. Arbre (15) selon l'une des revendications 1 à 8, dans lequel la première extrémité (16) comprend des cannelures (29) configurées pour venir en prise avec des dents du pignon d'entrée (14).

10. Ensemble d'entrainement pour un système propulsif (1), ledit ensemble comprenant un arbre (15) selon l'une des revendications 1 à 9 et un mécanisme de réduction (12) comprenant un pignon d'entrée (14), la première extrémité (16) de l'arbre (15) venant en prise avec le pignon d'entrée (14) du mécanisme de réduction (12) afin de l'entrainer en rotation autour de l'axe de rotation (X).

11. Système propulsif (1) comprenant un ensemble d'entrainement selon la revendication 10 et une section de turbine (7, 8), ladite section de turbine (7, 8) étant raccordée à l'arbre (15) de sorte à l'entrainer en rotation autour de l'axe de rotation (X).

12. Aéronef (100) comprenant un système propulsif (1) selon la revendication 11.

## Patentansprüche

1. Welle (15) für ein Antriebssystem (1), die ausgelegt ist, um einen Untersetzungsmechanismus (12) um eine Drehachse (X) rotatorisch anzutreiben, wobei die Welle (15) umfasst:
ein erstes Ende (16), das ausgelegt ist, um mit einem Eingangsritzel (14) des Untersetzungsmechanismus (12) in Eingriff zu kommen,
einen ersten Balg (17) und einen zweiten Balg (18), wobei der erste Balg (17) und der zweite Balg (18) um die Drehachse (X) rotationssymmetrisch sind, sich der erste Balg (17) zwischen dem ersten Ende (16) und dem zweiten Balg (18) erstreckt, und
einen Schaft (19), der den ersten Balg (17) und den zweiten Balg (18) mechanisch verbindet, wobei der Schaft (19) einen ersten Durchmesser in der Nähe des ersten Balgs (17) und einen zweiten Durchmesser in der Nähe des zweiten Balgs (18) aufweist,
wobei die Welle (15) **dadurch gekennzeichnet ist, dass** der Schaft (19) kegelstumpfförmig ist und dass der zweite Durchmesser strikt kleiner als der erste Durchmesser ist.

2. Welle (15) nach Anspruch 1, wobei ein maximaler Durchmesser (D1) des ersten Balgs (17) zwischen 80% und 120% eines maximalen Durchmessers (D2) des zweiten Balgs (18) beträgt.

3. Welle (15) für ein Antriebssystem (1), die ausgelegt ist, um einen Untersetzungsmechanismus (12) um eine Drehachse (X) rotatorisch anzutreiben, wobei die Welle (15) umfasst:
ein erstes Ende (16), das ausgelegt ist, um mit einem Eingangsritzel (14) des Untersetzungsmechanismus (12) in Eingriff zu kommen,
einen ersten Balg (17) und einen zweiten Balg (18), wobei der erste Balg (17) und der zweite Balg (18) um die Drehachse (X) rotationssymmetrisch sind, sich der erste Balg (17) zwischen dem ersten Ende (16) und dem zweiten Balg (18) erstreckt, und
einen Schaft (19), der den ersten Balg (17) und den zweiten Balg (18) mechanisch verbindet, wobei der Schaft (19) einen ersten Durchmesser in der Nähe des ersten Balgs (17) und einen zweiten Durchmesser in der Nähe des zweiten Balgs (18) aufweist,
wobei die Welle (15) **dadurch gekennzeichnet ist, dass** der Schaft (19) kegelstumpfförmig ist und dass der zweite Durchmesser strikt größer als der erste Durchmesser ist.

4. Welle (15) nach Anspruch 3, wobei ein maximaler Durchmesser des zweiten Balgs (17) zwischen 80% und 120% eines maximalen Durchmessers des ersten Balgs (18) beträgt.

5. Welle (15) nach einem der Ansprüche 1 bis 4, wobei ein Halbwinkel (α) an der Spitze des Kegelstumpfes, der durch den kegelstumpfförmigen Schaft (19) definiert ist, größer als oder gleich 5° und kleiner als oder gleich 25° ist.

6. Welle (15) nach einem der Ansprüche 1 bis 5, wobei der erste Balg (17) mit dem ersten Ende (16) durch eine erste Krümmung (22) verbunden ist, wobei ein Krümmungsradius der ersten Krümmung (22) größer als oder gleich 10 mm und kleiner als oder gleich 20 mm ist.

7. Welle (15) nach einem der Ansprüche 1 bis 6, wobei ein Abschnitt des ersten Endes (16) kegelstumpfförmig ist.

8. Welle (15) nach einem der Ansprüche 1 bis 7, wobei der zweite Balg (18) im Bereich einer zweiten Krümmung (26) mit dem Schaft (19) verbunden ist, wobei ein Krümmungsradius der zweiten Krümmung (26) größer als oder gleich 10 mm und kleiner als oder gleich 15 mm ist.

9. Welle (15) nach einem der Ansprüche 1 bis 8, wobei das erste Ende (16) Nuten (29) aufweist, die ausgelegt sind, um mit Zähnen des Eingangsritzels (14) in Eingriff zu kommen.

10. Antriebsanordnung für ein Antriebssystem (1), wobei die Anordnung eine Welle (15) nach einem der Ansprüche 1 bis 9 und einen Untersetzungsmechanismus (12) mit einem Eingangsritzel (14) umfasst, wobei das erste Ende (16) der Welle (15) mit dem Eingangsritzel (14) des Untersetzungsmechanismus (12) in Eingriff kommt, um es um die Drehachse (X) rotatorisch anzutreiben.

11. Antriebssystem (1), umfassend eine Antriebsanordnung nach Anspruch 10 und einen Turbinenabschnitt (7, 8), wobei der Turbinenabschnitt (7, 8) mit der Welle (15) derart verbunden ist, dass sie um die Drehachse (X) rotatorisch angetrieben wird.

12. Luftfahrzeug (100), umfassend ein Antriebssystem (1) nach Anspruch 11.

## Claims

1. A shaft (15) for a propulsion system (1) configured to drive a reduction mechanism a first end (16), configured to engage an input gear (14) of the reduction mechanism (12),
a first bellows (17) and a second bellows (18), the first bellows (17) and the second bellows (18) being revolutionnally symmetrical about the axis of rotation (X), the first bellows
(17) extends between the first end (16) and the second bellows (18), and
a shaft (19) mechanically connecting the first bellows (17) and the second bellows (18), the shaft (19) having a first diameter at the level of the first bellows (17) and a second diameter at the level of the second bellows (18),
the shaft (15) being **characterized in that** the shank (19) is frustoconical and **in that** the second diameter is strictly smaller than the first diameter.

2. Shaft (15) according to claim 1, wherein a maximum diameter (D1) of the first bellows (17) is between 80% and 120% of a maximum diameter (D2) of the second bellows (18).

3. A shaft (15) for a propulsion system (1) configured to rotate about an axis of rotation (X) a reduction mechanism (12), said shaft (15) comprising :
a first end (16), configured to engage an input gear (14) of the reduction mechanism (12),
a first bellows (17) and a second bellows (18), the first bellows (17) and the second bellows (18) bellows (18) being rotationally symmetrical about the axis of rotation (X), the first bellows (17) extends between the first end (16) and the second bellows (18), and
a shaft (19) mechanically connecting the first bellows (17) and the second bellows (18), the shaft (19) having a first diameter at the level of the first bellows (17) and a second diameter at the level of the second bellows (18),
the shaft (15) being **characterized in that** the shank (19) is frustoconical and **in that** the second diameter is strictly greater than the first diameter.

4. Shaft (15) according to claim 3, wherein a maximum diameter of the second bellows (17) is between 80% and 120% of a maximum diameter of the first bellows (18).

5. Shaft (15) according to one of claims 1 to 4, wherein a half-angle (c') at the apex of the truncated cone defined by the truncated conical shaft (19) is greater than or equal to 5° and less than or equal to 25°.

6. A shaft (15) according to one of claims 1 to 5, wherein the first bellows (17) is connected to the first end (16) by a first fillet (22), a radius of curvature of the first fillet (22) being greater than or equal to 10 mm and less than or equal to 20 mm.

7. Shaft (15) according to one of claims 1 to 6, wherein a portion of the first end (16) is frustoconical.

8. A shaft (15) according to one of claims 1 to 7, wherein the second bellows (18) is connected to the shaft (19) at a second fillet (26), a radius of curvature of the second fillet (26) being greater than or equal to 10 mm and less than or equal to 15 mm.

9. A shaft (15) according to any of claims 1 to 8, wherein the first end (16) comprises splines (29) configured to engage teeth of the input gear (14).

10. Drive assembly for a propulsion system (1), said assembly comprising a shaft (15) according to one of claims 1 to 9 and a reduction mechanism (12) comprising an input gear (14), the first end (16) of the shaft (15) engaging the input gear (14) of the reduction mechanism (12) in order to drive it in rotation about the axis of rotation (X).

11. Propulsion system (1) comprising a drive assembly according to claim 10 and a turbine section (7, 8), said turbine section (7, 8) being connected to the shaft (15) so as to drive it in rotation about the axis of rotation (X).

12. Aircraft (100) comprising a propulsion system (1) according to claim 11.
